# EUROPÄISCHE PATENTSCHRIFT

(11) **EP 2 208 676 B1**
(45) Veröffentlichungstag und Bekanntmachung des Hinweises auf die Patenterteilung: **20.06.2012**
(21) Anmeldenummer: 09015655.5
(22) Anmeldetag: 17.12.2009
(51) Int. Cl.: B65B 13/30

(54) **Rohrklemme**
Tube clamp
Serre-joint

(30) Priorität: 16.01.2009 DE 202009000508 U
(43) Veröffentlichungstag der Anmeldung: 21.07.2010
(73) Patentinhaber: Poloplast GmbH, 87640 Ebenhofen (DE)
(72) Erfinder: Birke, Karl, 87640 Bissenhofen (DE)
(74) Vertreter: Weber, Joachim

(56) Entgegenhaltungen:
- WO-A2-2005/071300
- DE-A1-102004 054 336
- US-A- 3 754 303
- US-A- 5 564 167
- US-A1- 2007 134 980

## Beschreibung

Die Erfindung betrifft eine Rohrklemme zur Verbindung eines Rohrs mit einem in das Rohr einsteckbaren Anschlussstück.

Aus der WO 2007/101110 A2 ist ein Klemmhülsen-Konnektor zur Verbindung eines Rohrs mit einem Fitting bekannt. Dabei ist vorgesehen, das Rohr auf das Fitting aufzustecken, wobei auf den Überlappungsbereich von Rohr und Fitting ein Verbindungselement in Form einer Hülse gesteckt wird. Innerhalb dieser Hülse befindet sich ein Metallring, mittels welchem das Rohr auf das Fitting gepresst werden kann. Um diesen Metallring verquetschen zu können, weist das hülsenartige Verbindungselement ein Fenster auf. Innerhalb dieses Fensters ist das Metallband mit einem Quetschwerkzeug greifbar. Diese Klemmhülse nach dem Stand der Technik ist jedoch relativ materialaufwendig, teuer in der Herstellung und auf Grund der vielen Einzelteile kompliziert in der Handhabung.

Es ist somit Aufgabe der vorliegenden Erfindung, eine Rohrklemme bereitzustellen, welche kostengünstig herstellbar ist, aus möglichst wenigen Bauteilen besteht sowie eine einfache und sichere Handhabung gewährleistet.

Die Lösung dieser Aufgabe erfolgt durch die Merkmale des Anspruches 1. Die Unteransprüche zeigen vorteilhafte Weiterbildungen der Erfindung auf.

Somit wird die Erfindung gelöst durch eine Rohrklemme zur Verbindung eines Rohrs mit einem in das Rohr einsteckbaren Anschlussstück, umfassend ein im Wesentlichen ringförmiges Klemmband, wobei das Klemmband entlang seiner Umfangsrichtung einen ringförmigen Abschnitt und einen Klemmabschnitt umfasst und wobei sich der Klemmabschnitt radial nach außen von dem ringförmigen Abschnitt absetzt und somit von einem Quetschwerkzeug greifbar ist, und ein Gehäuse, das sich über den Klemmabschnitt und somit über einen Teil des Umfangs des Rohrs erstreckt. Das Gehäuse weist eine innere Ausnehmung zur Aufnahme des Klemmabschnitts und eine an den Klemmabschnitt angrenzende, radial außerhalb des Klemmabschnitts liegende Wandung auf. Diese Wandung ist unter Einwirkung des Quetschwerkzeugs abbrechbar. Das heißt also, dass bei Betätigen der Rohrklemme bzw. bei Herbeiführen der Klemmwirkung der Rohrklemme sich diese Wandung vom Gehäuse löst und somit der Monteur erkennen kann, ob das Klemmband verquetscht wurde oder nicht. Ergänzend sei noch darauf hingewiesen, dass unter dem Begriff "Rohr" selbstverständlich auch ein Schlauch zu verstehen ist und somit die Rohrklemme auch zur Verbindung eines Schlauchs mit einem Anschlussstück ausgebildet ist. Im Regelfall ist so ein Anschlussstück in Form eines Stutzens oder Fittings ausgebildet. Jedoch kann alternativ das Anschlussstück auch durch ein weiteres Rohr oder einen weiteren Schlauch gebildet werden. Dabei wird dann das eine Rohr bzw. der eine Schlauch in das weitere Rohr bzw. den weiteren Schlauch eingesteckt und der dadurch entstehende Überlappungsbereich durch die erfindungsgemäße Rohrklemme verklemmt.

In vorteilhafter Ausgestaltung ist vorgesehen, dass die Wandung im Wesentlichen den gesamten Klemmabschnitt abdeckt. Dadurch ist sichergestellt, dass die Wandung vom Quetschwerkzeug gegriffen werden muss und folglich bei der Verquetschung abbricht. Würde man die Wandung nicht annähernd an die gesamte Breite des Klemmabschnitts anpassen, so könnte bei Verwendung eines Quetschwerkzeugs, welches schmäler ist als die Breite des Klemmabschnitts, ein Verquetschen des Klemmabschnitts vorgenommen werden, ohne dabei die Wandung zu greifen und zu zerstören.

Bevorzugt umfasst die Wandung beidseitig je einen hervorstehenden Absatz, um ein Ansetzen des Quetschwerkzeugs zu erleichtern und ein Abrutschen des Quetschwerkzeugs zu verhindern. Die beiden Absätze stehen derart hervor, dass sie die Wandung in einer Richtung quer zum Rohr verbreitern. Bevorzugt erstrecken sich die Absätze nur über einen Teil der axialen Länge der Wandung.

Weiter von Vorteil ist, dass die Wandung zumindest eine Sollbruchstelle aufweist. Dadurch kann die Wandung an exakter Stelle vom Gehäuse abgebrochen werden. Das restliche Gehäuse verbleibt also auf dem Klemmabschnitt, wohingegen die Wandung gezielt abbricht und somit anzeigt, dass die Verquetschung vorgenommen wurde.

In vorteilhafter Weise fertigt man das Gehäuse einteilig. Dadurch reduziert sich sowohl der Arbeits- als auch Maschineneinsatz bei der Herstellung der erfindungsgemäßen Rohrklemme erheblich.

Ferner von Vorteil ist es, das Gehäuse aus Kunststoff zu fertigen. Durch Wahl des geeigneten Kunststoffs kann die Wandung so gestaltet werden, dass sie während der Montage formstabil bleibt, durch das Quetschwerkzeug jedoch abbricht.

Bevorzugt ist das Gehäuse zweifarbig ausgebildet, und/oder die Wandung ist mit einer Signal- oder Leuchtfarbe ausgebildet, und/oder der Klemmabschnitt ist in einer Farbe, abweichend von seinem Grundwerkstoff, ausgebildet. Wird z.B. das gesamte Klemmband aus Metall gefertigt, so wird der Klemmabschnitt in einer Farbe, abweichend von metallischem Silber, ausgebildet.

Ferner von Vorteil ist es, das Gehäuse so zu gestalten, dass es in axialer Richtung des Klemmabschnitts, d.h. in axialer Richtung des zu verbindenden Rohrs, beidseitig je eine Seitenwandung aufweist. Dadurch schließt das Gehäuse das Klemmband seitlich ab. Folglich kann das Klemmband vor seiner endgültigen Verwendung auf einem Rohr, zumindest axial nicht aus dem Gehäuse rutschen. Um das Klemmband nun auch in radialer Richtung an das Gehäuse zu fixieren, ist vorteilhafterweise vorgesehen, dass das Gehäuse eine erste Verrastvorrichtung zur radialen Fixierung des Klemmbands aufweist. Solch eine erste Verrastvorrichtung kann vorteilhafterweise in Form von Rastnasen an den Innenseiten der Seitenwandung des Gehäuses vorgesehen werden.

Die Kombination aus der Wandung, den beiden Seitenwandungen und der ersten Verrastvorrichtung gewährleistet, dass das Gehäuse fest auf dem Klemmabschnitt sitzt. Folglich ist also sichergestellt, dass die erfindungsgemäße Rohrklemme, bestehend aus den beiden Teilen Klemmband und Gehäuse, vor ihrer Verwendung auf einem Rohr nicht in zwei Teile zerfällt.

In weiterer vorteilhafter Ausgestaltung wird das Klemmband aus Metall gefertigt und so ausgebildet, dass durch Quetschen des Klemmabschnitts eine Klemmfunktion der Rohrklemme herbeigeführt wird. Das Klemmband ist im Regelfall vorteilhafterweise entlang seines Umfangs geschlossen. Im Bereich des Klemmabschnitts, zwischen zwei Angriffspunkten des Quetschwerkzeugs, kann das Klemmband jedoch offen sein. Damit durch Quetschen des Klemmabschnitts die Klemmfunktion der Rohrklemme herbeigeführt wird, ist vorteilhafterweise bei der Materialwahl des Klemmbandes dessen plastische Verformbarkeit zu berücksichtigen.

Zur weiteren Ausgestaltung der erfindungsgemäßen Rohrklemme ist vorteilhafterweise vorgesehen, dass seitlich am Gehäuse eine scheibenförmige Halterung mit kreisförmiger Aussparung angeordnet ist. Die Halterung ist dazu ausgebildet, um das Rohr und/oder das Anschlussstück aufzunehmen. Dazu folgt die scheibenförmige Halterung im Wesentlichen der Kreisform des ringförmigen Abschnitts des Klemmbands. Die kreisförmige Aussparung innerhalb der scheibenförmigen Halterung ist entweder auf einen Durchmesser des Anschlussstücks oder einen Durchmesser des Rohrs angepasst. In einer vorteilhaften Alternative kann die kreisförmige Aussparung auch zwei verschiedene Innendurchmesser aufweisen und somit eine Aufnahme sowohl für das Anschlussstück als auch für das Rohr bieten.

Vorteilhafterweise ist vorgesehen, dass die der scheibenförmigen Halterung zugewandte Seitenwandung um einen axialen Versatz von der scheibenförmigen Halterung beabstandet ist. Dieser Versatz definiert sich zwischen einer Außenseite dieser Seitenwandung und ein Außenseite der ringförmigen Halterung. Bevorzugt entspricht dieser Versatz der Breite der ringförmigen Halterung, so dass eine Innenseite der ringförmigen Halterung mit der Außenseite der Wandung fluchtet. Es ist somit bevorzugt möglich die scheibenförmige Halterung axial versetzt zu den Seitenwänden des Gehäuses anzuordnen um bei entsprechender Verwendung eines Klemmbandes ohne Kragen ein Durchschieben des Rohres durch das Klemmband bis zur scheibenförmigen Halterung zu ermöglichen und so die richtige Aufschiebtiefe des Rohres vor dem verquetschen gut sichtbar zu machen. Insbesondere ist das Klemmband axial versetzt zu einer Innenwand der scheibenförmigen Halterung angeordnet. Dadurch entsteht ein Spalt zwischen Halterung und Klemmband, welcher die Aufschiebtiefe der Rohrklemme erkennen lässt.

Eine vorteilhafte Weiterbildung der scheibenförmigen Halterung sieht vor, dass auf einer Stirnfläche dieser Halterung zumindest ein Absatz vorgesehen ist, welcher zur Halterung des ringförmigen Abschnitts des Klemmbandes ausgebildet ist. Die scheibenförmige Halterung verläuft also seitlich des Klemmbandes, wobei das Klemmband mit seiner üblicherweise sehr dünnen Stirnseite auf einer Stirnfläche der scheibenförmigen Halterung aufliegt. Damit nun das Klemmband seine ringförmige Form behält und nicht in einen beispielsweise ungewollten ovalen Zustand deformiert wird, sieht die Stirnfläche der scheibenförmigen Halterung zumindest einen Absatz zur Fixierung des Klemmbandes vor.

Vorteilhafterweise fertigt man das Gehäuse zusammen mit der scheibenförmigen Halterung einteilig aus Kunststoff, um sowohl die Arbeitszeit als auch den Material-und Maschineneinsatz bei der Herstellung zu optimieren.

Eine weitere vorteilhafte Ausgestaltung der erfindungsgemäßen Rohrklemme sieht vor, dass die Halterung eine zweite Verrastvorrichtung umfasst, welche zur Verbindung mit dem Anschlussstück ausgebildet ist. Mittels dieser zweiten Verrastvorrichtung kann die erfindungsgemäße Rohrklemme mit dem Anschlussstück verbunden werden. Diese Anordnung ist besonders montagefreundlich für den Verwender der erfindungsgemäßen Rohrklemme, da dank der zweiten Verrastvorrichtung das Anschlussstück und die Rohrklemme verbunden werden können, bevor das Rohr beispielsweise abgelängt und auf das Anschlussstück aufgesteckt wird.

Nachfolgend werden zwei Ausführungsbeispiele der Erfindung unter Bezugnahme auf die begleitende Zeichnung im Detail beschrieben. In der Zeichnung zeigt:
- Fig. 1a/b: perspektivische Ansichten einer erfindungsgemäßen Rohrklemme nach einem ersten Ausführungsbeispiel, montiert auf einem Rohr,
- Fig. 2: eine perspektivische Ansicht eines Gehäuses und einer Halterung der erfindungsgemäßen Rohrklemme nach dem ersten Ausführungsbeispiel,
- Fig. 3: eine Draufsicht auf Gehäuse und Halterung der erfindungsgemäßen Rohrklemme nach dem ersten Ausführungsbeispiel,
- Fig. 4: eine erste Seitenansicht von Gehäuse und Halterung der erfindungsgemäßen Rohrklemme nach dem ersten Ausführungsbeispiel,
- Fig. 5: eine zweite Seitenansicht von Gehäuse und Halterung der erfindungsgemäßen Rohrklemme nach dem ersten Ausführungsbeispiel,
- Fig.6a/b: eine erste geschnittene Ansicht von Gehäuse und Halterung der erfindungsgemäßen Rohrklemme nach dem ersten Ausführungsbeispiel,
- Fig. 7a/b: eine zweite geschnittene Ansicht von Gehäuse und Halterung der erfindungsgemäßen Rohrklemme nach dem ersten Ausführungsbeispiel,
- Fig. 8a/b: perspektivische Ansichten eines Klemmbandes der erfindungsgemäßen Rohrklemme nach dem ersten Ausführungsbeispiel,
- Fig. 9: eine perspektivische Ansicht eines Gehäuses und einer Halterung der erfindungsgemäßen Rohrklemme nach einem zweiten Ausführungs- beispiel,
- Fig. 10: eine Ansicht von unten auf Gehäuse und Halterung der erfindungsgemäßen Rohrklemme nach dem zweiten Ausführungsbeispiel,
- Fig. 11: eine geschnittene Ansicht von Gehäuse und Halterung der erfindungsgemäßen Rohrklemme nach dem zweiten Ausführungsbeispiel, und
- Fig. 12: eine Seitenansicht der erfindungsgemäßen Rohrklemme nach dem zweiten Ausführungsbeispiel, montiert auf einem Rohr.

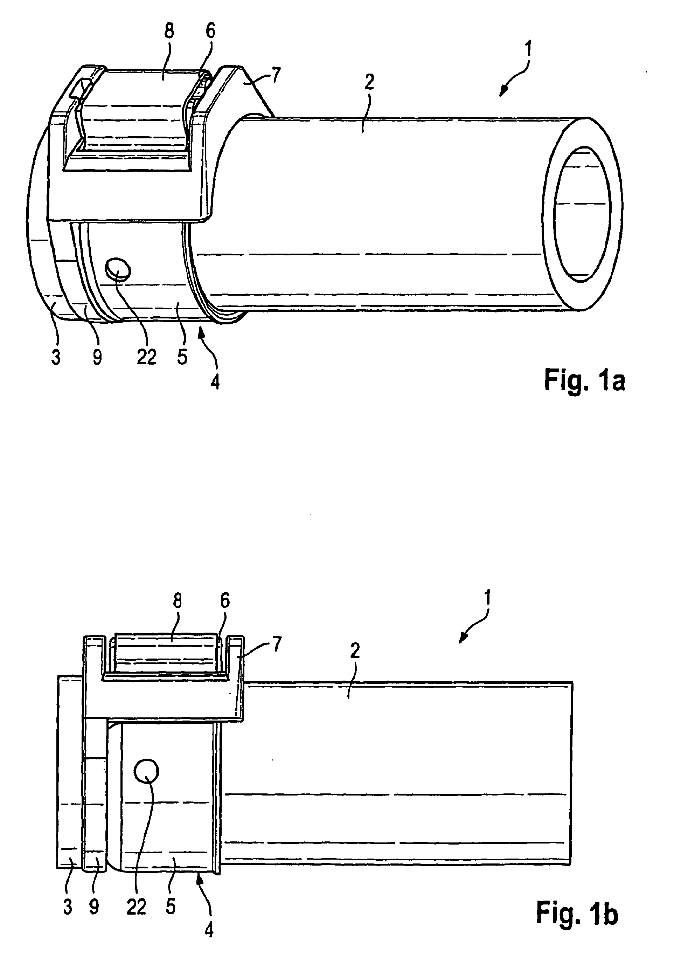

Nachfolgend wird die Erfindung anhand eines Ausführungsbeispiels, gezeigt in den Fig. 1 bis 8b, genauer erläutert.

Fig. 1a/b zeigen eine erfindungsgemäße Rohrklemme 1 nach dem Ausführungsbeispiel auf einem Rohr bzw. Schlauch 2, in welchem ein Anschlüssstück bzw. Fitting 3 steckt.

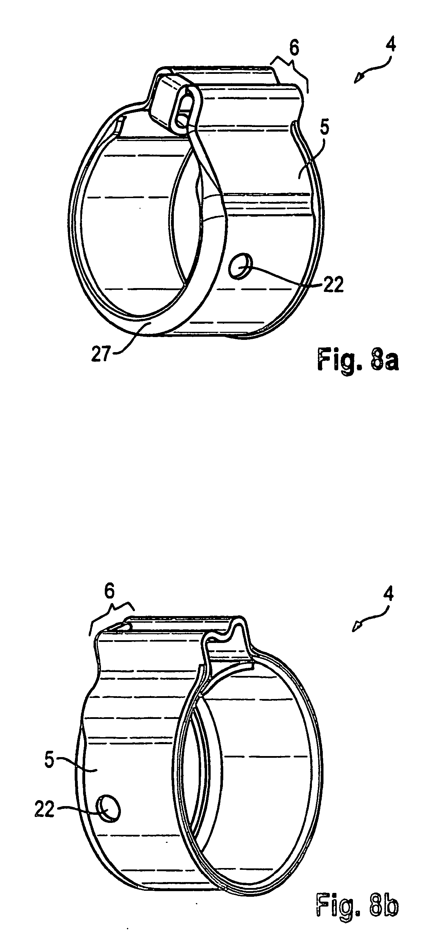

Die Rohrklemme 1 besteht aus einem Klemmband 4 mit einem Klemmabschnitt 6, einem den Innendurchmesser des Klemmbandes 4 verjüngenden Kragen 27 (besser zu erkennen in den Fig. 8 a/b) und einem ringförmigen Abschnitt 5, welcher der Außenkontur des Rohrs 2 folgt und das Rohr umschließt. Auf diesem Klemmabschnitt 6 sitzt ein Gehäuse 7 mit einer Wandung 8. Diese Wandung 8 liegt radial außerhalb des Klemmabschnitts 6 und folgt im Wesentlichen der Kontur des Klemmabschnitts 6. Axial seitlich des Klemmbands 4, zwischen dem Anschlussstück 3 und dem Rohr 2, befindet sich eine scheibenförmige Halterung 9. Eine Ausnehmung 22 im ringförmigen Abschnitt 5 dient als Kontrollfenster zur Überprüfung der Einschubtiefe des Rohrs 2.

Das Klemmband 4 ist aus Metall gefertigt. Das Gehäuse 7 inklusive Wandung 8 wurde zusammen mit der scheibenförmigen Halterung 9 einteilig aus Kunststoff gespritzt.

Fig. 1a/b zeigen also das Rohr 2, welches auf einem Stutzen des Anschlussstücks 3 steckt. Radial außerhalb des Rohrs 2 und des Überlappungsbereichs von dem Anschlussstück 3 und dem Rohr 2 befindet sich die Rohrklemme 1. Der Klemmabschnitt 6 der Rohrklemme 1 ist von der Wandung 8 bedeckt. Diese Wandung 8 ist abbrechbar ausgestaltet. Ein Quetschwerkzeug umgreift somit zwangsläufig diese Wandung 8 und bei Verquetschen des Klemmabschnitts 6 wird die Wandung 8 zerstört und löst sich von der Rohrklemme 1. Dadurch kann durch einen kurzen Blick auf die Rohrklemme 1 festgestellt werden, ob das Quetschwerkzeug bereits angesetzt wurde und die Klemmverbindung zwischen dem Rohr 2 und dem Anschlussstück 3 herbeigeführt wurde. Vorteilhafterweise kann man diese Wandung 8 in auffälliger Farbe gestalten, um eine schnelle Kontrolle zu unterstützen.

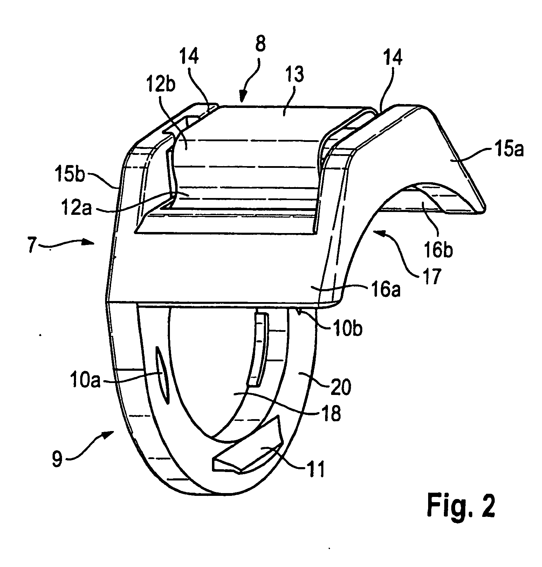

Die folgenden Fig. 2 bis 7b zeigen nun die Rohrklemme 1 ohne das Klemmband 4, um Details im Gehäuse 7 sowie in der Halterung 9 aufzuzeigen. Der Übersichtlichkeit halber wurden auch das Rohr 2 sowie das Anschlussstück 3 bei den Fig. 2 bis 7b ausgeblendet.

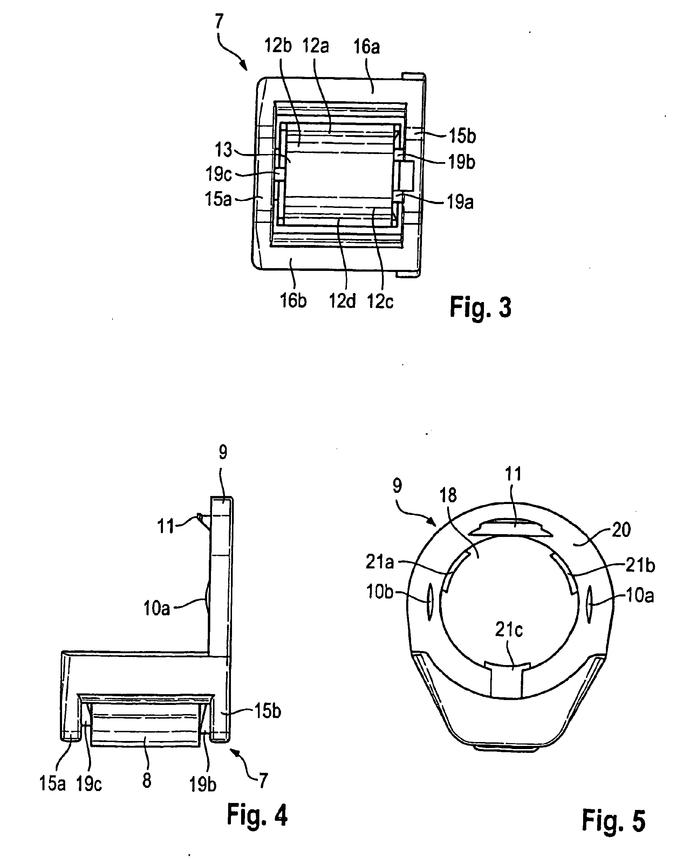

Fig. 2 zeigt das Gehäuse 7 sowie die scheibenförmige Halterung 9 der Rohrklemme 1 nach dem Ausführungsbeispiel. Dabei ist zu sehen, wie die Halterung 9 auf einer Stirnfläche 20 einen ersten Absatz 10a, einen zweiten Absatz 10b (besser zu sehen in Fig. 5) sowie eine Nase 11 zur Fixierung des Klemmbandes 4 aufweist. Des Weiteren ist innerhalb der scheibenförmigen Halterung 9 eine kreisförmige Aussparung 18 vorgesehen.

Das Gehäuse 7 umfasst eine erste Seitenwandung 15a, eine zweite Seitenwandung 15b sowie einen ersten Steg 16a und einen zweiten Steg 16b jeweils zwischen der ersten Seitenwandung 15a und der zweiten Seitenwandung 15b. Die Wandung 8 erstreckt sich von diesem ersten Steg 16a bandförmig, im Querschnitt betrachtet bogen oder U-förmig, zum zweiten Steg 16b. Mit anderen Worten, beginnt die Wandung 8 an dem ersten Steg 16a und endet am zweiten Steg 16b, bzw. umgekehrt. Die Wandung 8 geht dazu ab dem ersten Steg 16a in eine erste konkave Fläche 12a über. Daran schließt sich eine erste konvexe Fläche 12b an, wonach die Wandung 8 in eine ebene Fläche 13 übergeht. Mit dieser ebenen Fläche 13 überbrückt die Wandung 8 den Klemmabschnitt 6 des Klemmbands 4 und geht anschließend in eine zweite konvexe Fläche 12c und eine daran anschließende zweite konkave Fläche 12d über. Anschließend läuft die Wandung 8 in den zweiten Steg 16b ein. Die zweite konvexe Fläche 12c sowie die zweite konkave Fläche 12d sind beispielsweise in Fig. 3 gut zu sehen. Durch diese bogenförmige bzw. U-förmige Gestaltung der Wandung 8 entsteht im Gehäuse 7 eine innere Ausnehmung 17. In dieser Ausnehmung 17 sitzt der Klemmabschnitt 6 des Klemmbandes 4.

Diese soeben beschriebene erste konkave Fläche 12a sowie die zweite konkave Fläche 12d bieten die Angriffsflächen für das zangenartige Quetschwerkzeug.

Des Weiteren ist in Fig. 2 zwischen der ersten Seitenwandung 15a und der Wandung 8 sowie der zweiten Seitenwandung 15b und der Wandung 8 jeweils ein fertigungstechnischer Spalt 14 zu sehen. Theoretisch könnte man natürlich die Wandung 8 fast bis zur ersten Seitenwandung 15a bzw. bis zur zweiten Seitenwandung 15b heranführen. Wie sich jedoch noch zeigen wird, befindet sich innerhalb der ersten Seitenwandung 15a und der zweiten Seitenwandung 15b eine erste Verrastvorrichtungen. Um das Gehäuse 7 einteilig zu fertigen, bedarf es deshalb der beiden fertigungstechnischen Spalte 14. Des Weiteren muss die Wandung 8 etwas von den Seitenwandungen 15a, 15b beabstandet sein, um ein Abfallen der Wandung 8 nach dem Verquetschen sicherzustellen.

Die Fig. 3 bis 5 zeigen das Gehäuse 7 mit der Halterung 9 der Rohrklemme 1 nach dem Ausführungsbeispiel in Draufsicht sowie in zwei Seitenansichten.

In Fig. 3 ist die soeben angesprochene erste Verrastvorrichtung gut zu sehen. Diese besteht aus einer ersten Rastnase 19a, einer zweiten Rastnase 19b und einer dritten Rastnase 19c. Diese drei Rastnasen 19a, 19b, 19c dienen dazu, dass man das Klemmband 4 nach Fertigstellung des Gehäuses 7 in selbiges einklipsen kann. Durch die keilförmige Gestaltung der drei Rastnasen 19a, 19b, 19c wird das Klemmband 4, und insbesondere sein Klemmabschnitt 6 an der Innenfläche der Wandung 8 gehalten. Wie man nun in Fig. 4 sieht, ist die dritte Rastnase 19c integraler Bestandteil der ersten Seitenwandung 15a, wohingegen die erste Rastnase 19a sowie die zweite Rastnase 19b integraler Bestandteil der zweiten Seitenwandung 15b sind. Des Weiteren sieht man in Fig. 4, dass sich die erste Rastnase 19a sowie die zweite Rastnase 19b in ihrer Höhe, d.h., in ihrem Abstand zur ebenen Fläche 13 der Wandung 8, von der dritten Rastnase 19c unterscheiden. Aus Fig. 3 ist ersichtlich, dass sich die dritte Rastnase 19c genau in der Mitte des Gehäuses 7 befindet, wohingegen die erste Rastnase 19a etwas zum zweiten Steg 16b und die zweite Rastnase 19b etwas zum ersten Steg 16a versetzt ist. Die drei Rastnasen 19a, 19b, 19c sind dadurch der exakten Kontur des Klemmabschnitts 6 angepasst. Dieser Klemmabschnitt 6 verläuft unterhalb der ersten konkaven Fläche 12a, der ersten konvexen Fläche 12b sowie der zweiten konvexen Fläche 12c und der zweiten konkaven Fläche 12d, entsprechend der Wandung 8 und schmiegt sich an selbige an. Unterhalb der ebenen Fläche 13 der Wandung 8 weist der Klemmabschnitt 6 jedoch eine konkave, in Richtung Rohr gewölbte Fläche auf. Diese Ausgestaltung des Klemmabschnitts 6 ermöglicht bei Quetschung des Klemmabschnitts 6 eine zieharmonikaartige Verformung des Klemmabschnitts 6.

Des Weiteren zu sehen in den Fig. 4 und 5 ist eine zweite Verrastvorrichtung, bestehend aus einem ersten Flansch 21a, einem zweiten Flansch 21b und einem dritten Flansch 21c innerhalb der kreisförmigen Aussparung 18. Diese drei Flansche 21a, 21b, 21c greifen in entsprechende Nuten in dem Anschlussstück 3 ein und somit verrastet die gesamte Rohrklemme 1 bei Aufstecken auf das Anschlussstück 3 mit selbigem.

Ferner zeigen Fig. 4 und 5 den ersten Absatz 10a, den zweiten Absatz 10b sowie die Nase 11 zur Fixierung des Klemmbandes 4. In Fig. 1 ist beispielsweise gezeigt, wie der erste Absatz 10a in eine bogenförmige Aussparung des ringförmigen Abschnitts 5 des Klemmbands 4 eingreift und das Klemmband 4 somit in seiner Form fixiert. Fig. 4 zeigt die nach außen gerichtete Nase 11 gegenüber dem Gehäuse 7. Dank dieser Nase 11 kann der ringförmige Abschnitt 5 des Klemmbands 4 in seiner Form gehalten werden. Dies erleichtert das Aufstecken der Rohrklemme 1 auf ein Rohr 2 bzw. Anschlussstück 3.

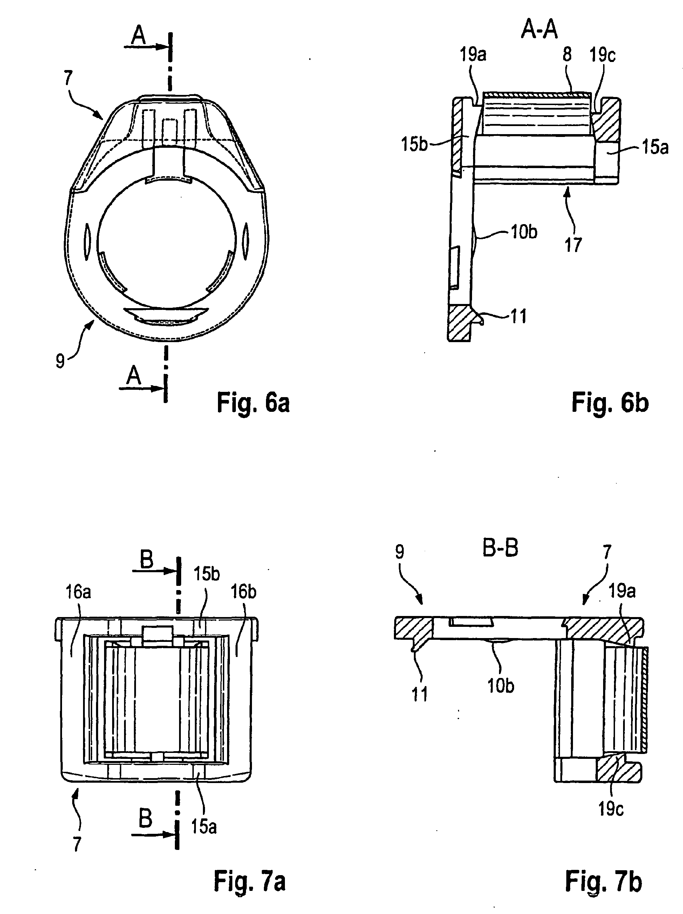

Die beiden Fig. 6b und 7b zeigen das Gehäuse 7 und die Halterung 9 der Rohrklemme 1 nach dem Ausführungsbeispiel in zwei geschnittenen Ansichten. Fig. 6a zeigt einen Schnittverlauf A-A für die Fig. 6b und Fig. 7a zeigt einen Schnittverlauf B-B für die Fig. 7b. Fig. 6b zeigt nochmals die innere Ausnehmung 17, welche durch die Wandung 8 im Gehäuse 7 gebildet wird und zur Aufnahme des Klemmabschnitts 6 dient. Fig. 7b zeigt die unterschiedliche Positionierung der ersten Rastnase 19a und der dritten Rastnase 19c.

In den Fig. 8a/b ist die das Klemmband 4 ohne Gehäuse 7 zu sehen. Dabei wird verdeutlicht wie der Klemmabschnitt 6 ausgebildet ist, um sich der Kontur der konkaven und konvexen Flächen 12a-12d der Wandung 8 anzupassen.

Anhand dieses Ausführungsbeispiels wurde nun deutlich, wie die erfindungsgemäße Rohrklemme trotz einfachem und kostengünstigem Aufbau eine sichere Klemmverbindung zwischen einem Rohr und einem Anschlussstück sicherstellen kann. Mittels der abbrechbaren Wandung 8 kann man die erfindungsgemäße Rohrklemme jederzeit daraufhin visuell kontrollieren, ob der Verquetschvorgang durchgeführt wurde. Dadurch, dass sich die abbrechbare Wandung 8 über annähernd die gesamte Breite des Klemmabschnitts 6 erstreckt, wird sichergestellt, dass der Klemmabschnitt 6 unter keinen Umständen von einem Quetschwerkzeug gegriffen werden kann, ohne dabei gleichzeitig die Wandung 8 zu greifen und diese zu zerstören.

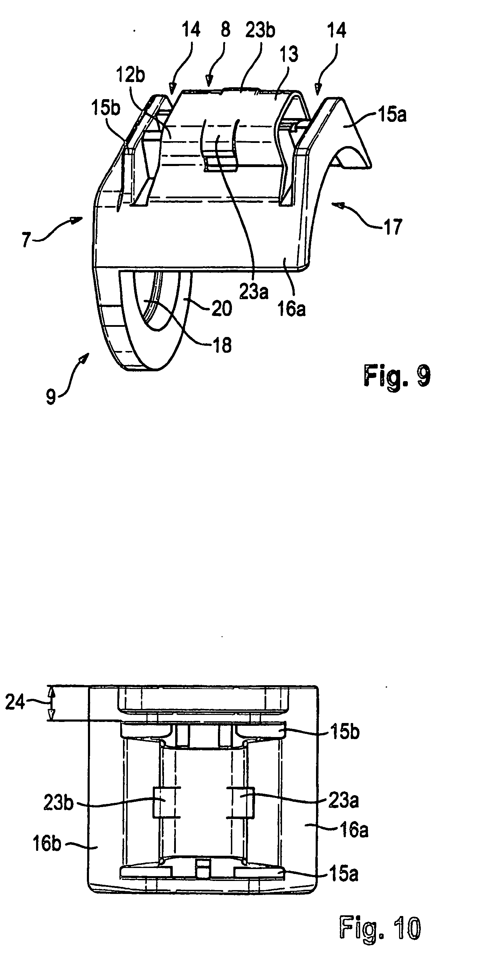

Die Fig. 9 bis 12 zeigen ein zweites Ausführungsbeispiel der Rohrklemme 1. Gleiche bzw. funktional gleiche Bauteile sind in beiden Ausführungsbeispielen mit denselben Bezugszeichen versehen. Im zweiten Ausführungsbeispiel umfasset die Wandung 8 zwei nach außen hervorstehende Absätze 23a, 23b. Die Absätze 23a, 23b sind nasenförmig ausgebildet und können somit vom Quetschwerkzeug untergriffen werden. Ein Abrutschen des Quetschwerkzeugs wird somit weitgehend verhindert. Der erste Absatz 23a befindet sich auf der ersten konvexen Fläche 12b. Der zweite Absatz 23b befindet sich auf der zweiten konvexen Fläche 12c.

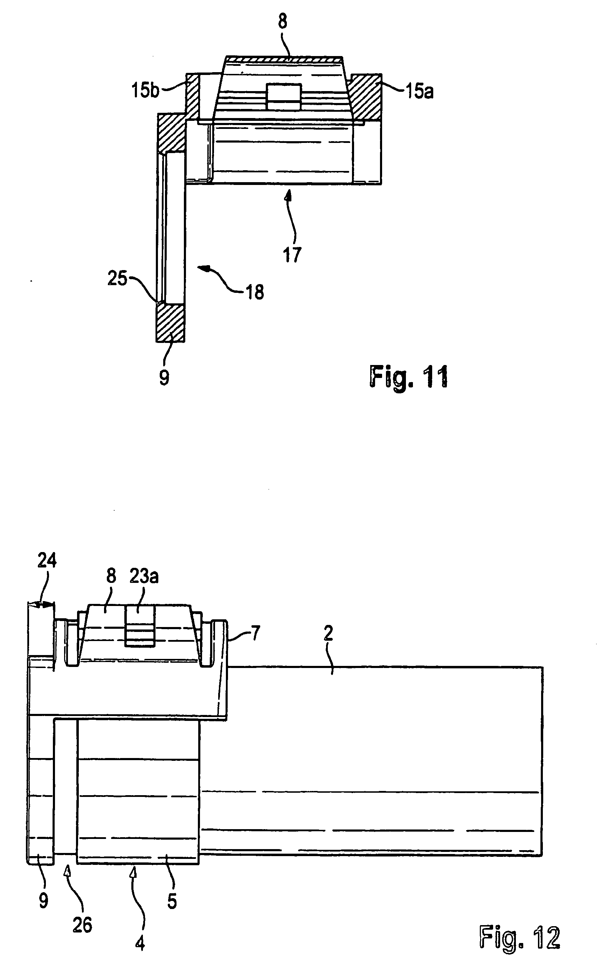

Die Fig. 11 und 12 zeigen einen axialen Versatz 24 zwischen einer Außenseite der scheibenförmigen Halterung 9 und einer Außenseite der zweiten Seitenwandung15b. Durch diesen Versatz 24 entsteht ein Sichtspalt 26 zwischen dem Klemmband 4 und der Halterung 9. Durch diesen Sichtspalt 24 ist die Aufschiebtiefe des Rohres 2 auf der Rohrklemme 1 zu sehen. Auf den Kragen 27 am Klemmband 4 (siehe Fig. 8a) wir im zweiten Ausführungsbeispiel verzichtet. Das Rohr 2 kann somit bis zum Anschlag an der Halterung 9 eingeführt werden und ist im Sichtspalt 26 sichtbar. Auf die Ausnehmung 22 (siehe Fig. 8b) kann folglich ebenfalls verzichtet werden.

Am Innenumfang der scheibenförmigen Halterung 9 ist ein Krallenring 25 ausgebildet. Dieser Krallenring 25 greift in eine entsprechende Nut im Anschlussstück 3 und somit verrastet die gesamte Rohrklemme 1 beim Aufstecken auf das Anschlussstück 3 mit selbigem.

### Bezugszeichenliste

- 1: Rohrklemme
- 2: Rohr
- 3: Anschlussstück
- 4: Klemmband
- 5: ringförmiger Abschnitt
- 6: Klemmabschnitt
- 7: Gehäuse
- 8: Wandung
- 9: scheibenförmige Halterung
- 10a,b: Absätze
- 11: Nase
- 12a,d: konkave Flächen der Wandung
- 12b,c: konvexe Flächen der Wandung
- 13: ebene Fläche der Wandung
- 14: fertigungstechnischer Spalt
- 15a,b: Seitenwandungen
- 16a,b: Stege
- 17: innere Ausnehmung
- 18: kreisförmige Aussparung
- 19a-c: Rastnasen
- 20: Stirnfläche
- 21 a-c: Flansche
- 22: Ausnehmung
- 23 a, b: Absatz
- 24: Versatz
- 25: Krallenring
- 26: Sichtspalt
- 27: Kragen

## Patentansprüche

1. Rohrklemme (1) zur Verbindung eine Rohrs (2) mit einem in das Rohr (2) einsteckbaren Anschlussstück (3), umfassend
- ein im Wesentlichen ringförmiges Klemmband (4), wobei das Klemmband (4) entlang seiner Umfangsrichtung einen ringförmigen Abschnitt (5) und einen Klemmabschnitt (6) umfasst, und wobei sich der Klemmabschnitt (6) radial nach außen von dem ringförmigen Abschnitt (5) absetzt und somit von einem Quetschwerkzeug greifbar ist, und
- ein Gehäuse (7), das sich über den Klemmabschnitt (6) und über einen Teil des Umfangs des Rohrs (2) erstreckt, aufweisend eine radial innere Ausnehmung (17) zur Aufnahme des Klemmabschnitts (6) und eine an den Klemmabschnitt (6) angrenzende, radial außerhalb des Klemmabschnitts (6) liegende Wandung (8), wobei die Wandung (8) unter Einwirkung des Quetschwerkzeugs abbrechbar ist.

2. Rohrklemme nach Anspruch 1, **dadurch gekennzeichnet, dass** die Wandung (8) im Wesentlichen den gesamten Klemmabschnitt (6) abdeckt.

3. Rohrklemme nach einem der vorhergehenden Ansprüche, **dadurch gekennzeichnet, dass** die Wandung (8) zwei hervorstehende Absätze (23a, 23b) umfasst, um ein Abrutschen des Quetschwerkzeugs zu verhindern.

4. Rohrklemme nach einem der vorhergehenden Ansprüche, **dadurch gekennzeichnet, dass** die Wandung (8) zumindest eine Sollbruchstelle aufweist

5. Rohrklemme nach einem der vorhergehenden Ansprüche, **dadurch gekennzeichnet, dass** das Gehäuse (7) einstückig ausgebildet ist.

6. Rohrklemme nach einem der vorhergehenden Ansprüche, **dadurch gekennzeichnet, dass** das Gehäuse (7) aus Kunststoff besteht.

7. Rohrklemme nach einem der vorhergehenden Ansprüche, **dadurch gekennzeichnet, dass** das Gehäuse (7) zweifarbig ausgebildet ist, und/oder
dass die Wandung (8) mit einer Signal- oder Leuchtfarbe ausgebildet ist, und/oder
dass der Klemmabschnitt (6) in einer Farbe, abweichend von seinem Grundwerkstoff, ausgebildet ist.

8. Rohrklemme nach einem der vorhergehenden Ansprüche, **dadurch gekennzeichnet, dass** das Gehäuse (7) in axialer Richtung des Rohrs (2) beidseitig des Klemmabschnitts (6) je eine Seitenwandung (15a, 15b) aufweist.

9. Rohrklemme nach einem der vorhergehenden Ansprüche, **dadurch gekennzeichnet, dass** das Gehäuse (7) eine erste Verrastvorrichtung (19a, 19b, 19c) zur Fixierung des Klemmbands (4) aufweist.

10. Rohrklemme nach einem der vorhergehenden Ansprüche, **dadurch gekennzeichnet, dass** das Klemmband (4) aus Metall besteht und so ausgebildet ist, dass durch Quetschen des Klemmabschnitts (6) eine Klemmfunktion der Rohrklemme (1) herbeigeführt wird.

11. Rohrklemme nach einem der vorhergehenden Ansprüche, **dadurch gekennzeichnet, dass** eine scheibenförmige Halterung (9) mit kreisförmiger Aussparung (18) seitlich am Gehäuse (7) angeordnet ist, wobei die Halterung (9) zur Aufnahme des Rohrs (2) und/oder des Anschlussstücks (3) ausgebildet ist.

12. Rohrklemme nach Anspruch 11, **dadurch gekennzeichnet, dass** die der scheibenförmigen Halterung (9) zugewandte Seitenwandung (15b) um einen axialen Versatz (24) von der scheibenförmigen Halterung (9) beabstandet ist.

13. Rohrklemme nach einem der Ansprüche 11 oder 12, **dadurch gekennzeichnet, dass** die Halterung (9) auf einer Stirnfläche (20) zumindest einen Absatz (10a, 10b, 11) umfasst, welcher zur Halterung des ringförmigen Abschnitts (5) des Klemmbandes (6) ausgebildet ist.

14. Rohrklemme nach einem der Ansprüche 11 bis 13, **dadurch gekennzeichnet, dass** das Gehäuse (7) zusammen mit der scheibenförmigen Halterung (9) einstückig aus Kunststoff ausgebildet ist.

15. Rohrklemme nach einem der Ansprüche 11 bis 14, **dadurch gekennzeichnet, dass** die Halterung (9) eine zweite Verrastvorrichtung (21a, 21b, 21c) umfasst, welche zur Verbindung mit dem Anschlussstück (3) ausgebildet ist.

## Claims

1. Pipe clamp (1) for connecting a tube (2) having a pipe fitting (3) pluggable into the tube (2), comprising
- a substantially annular clamping band (4), wherein the clamping band (4) includes along its circumferential direction an annular portion (5) and a clamping section (6), and wherein the clamping section (6) settles radially outwardly from the annular portion (5) and therefore is sizeable by a pinching tool, and
- a housing (7) which extends over the clamping portion (6) and part of the circumference of the tube (2), comprising a radially inner recess (17) for receiving the clamping portion (6) and adjacent to the clamping portion (6) a wall (8) disposed radially outside of the clamping section (6), wherein the wall (8) is breakable under the action of the pinching tool.

2. Pipe clamp according to claim 1, **characterized in that** the wall (8) is substantially covering the whole clamping section (6).

3. Pipe clamp according to one of the preceding claims, **characterized in that** the wall (8) has two projecting shoulders (23a, 23b) to prevent slippage of the pinching tool.

4. Pipe clamp according to one of the preceding claims, **characterized in that** the wall (8) has at least one predetermined breaking point.

5. Pipe clamp according to one of the preceding claims, **characterized in that** the housing (7) is integrally formed.

6. Pipe clamp according to one of the preceding claims, **characterized in that** the housing (7) is made of plastic.

7. Pipe clamp according to one of the preceding claims, **characterized in that** the housing (7) is formed in two colours, and/or
that the wall (8) is formed with a signal or luminous colour, and/or
that the clamping section (6) is formed in a colour different from its base material.

8. Pipe clamp according to one of the preceding claims, **characterized in that** the housing (7) in the axial direction of the tube (2) on both sides of the clamping section (6) has a side wall (15a, 15b), respectively.

9. Pipe clamp according to one of the preceding claims, **characterized in that** the housing (7) has a first latching device (19a, 19b, 19c) for fixing the clamping band (4).

10. Pipe clamp according to one of the preceding claims, **characterized in that** the clamping band (4) is made of metal and is formed so that by squeezing the clamping portion (6) a clamping function of the pipe clamp (1) is brought about.

11. Pipe clamp according to one of the preceding claims, **characterized in that** a disc-shaped holder (9) with a circular recess (18) is arranged laterally on the housing (7), wherein the holder (9) is formed for receiving the tube (2) and/or the pipe fitting (3).

12. Pipe clamp according to claim 11, **characterized in that** the disc-shaped holder (9) facing the side wall (15b) is spaced by an axial offset (24) from the disk-shaped holder (9).

13. Pipe clamp according to any one of claims 11 or 12, **characterized in that** the holder (9) includes on one end face (20) at least one shoulder (10a, 10b, 11), which is formed for holding the annular portion (5) of the clamping band (6).

14. Pipe clamp according to any one of claims 11 to 13, **characterized in that** the housing (7), and the disk-shaped holder (9) are integrally formed from plastic.

15. Pipe clamp according to any one of claims 11 to 14, **characterized in that** the holder (9) includes a second latching device (21 a, 21 b, 21 c) which is designed for connection to the pipe fitting (3).

## Revendications

1. Collier de serrage (1) pour la liaison d'un tuyau (2) avec un raccord (3) pouvant être emboîté dans le tuyau (2), comprenant
- une bande de serrage (4) sensiblement annulaire, sachant que la bande de serrage (4) comporte le long de son sens périphérique une section annulaire (5) et une section de serrage (6), et sachant que la section de serrage (6) se décale radialement vers l'extérieur de la section annulaire (5) et peut ainsi être saisie par un outil de serrage, et
- un boîtier (7) qui s'étend sur la section de serrage (6) et sur une partie de la périphérie du tuyau (2), présentant un évidement radialement intérieur (17) pour le logement de la section de serrage (6) et une paroi (8) se trouvant radialement à l'extérieur de la section de serrage (6), jouxtant la section de serrage (6), sachant que la paroi (8) peut être rompue sous l'action de l'outil de serrage.

2. Collier de serrage selon la revendication 1, **caractérisé en ce que** la paroi (8) recouvre sensiblement la section de serrage entière (6).

3. Collier de serrage selon l'une quelconque des revendications précédentes, **caractérisé en ce que** la paroi (8) comporte deux épaulements (23a, 23b) en saillie afin d'empêcher un glissement de l'outil de serrage.

4. Collier de serrage selon l'une quelconque des revendications précédentes, **caractérisé en ce que** la paroi (8) présente au moins un point destiné à la rupture.

5. Collier de serrage selon l'une quelconque des revendications précédentes, **caractérisé en ce que** le boîtier (7) est réalisé d'un seul tenant.

6. Collier de serrage selon l'une quelconque des revendications précédentes, **caractérisé en ce que** le boîtier (7) est composé de plastique.

7. Collier de serrage selon l'une quelconque des revendications précédentes, **caractérisé en ce que** le boîtier (7) est réalisé en deux couleurs, et/ou **en ce que** la paroi (8) est réalisée avec une couleur de signal ou fluorescente et/ou
**en ce que** la section de serrage (6) est réalisée dans une couleur divergeant de celle de son matériau de base.

8. Collier de serrage selon l'une quelconque des revendications précédentes, **caractérisé en ce que** le boîtier (7) présente une paroi latérale (15a, 15b) dans le sens axial du tuyau (2) de part et d'autre de la section de serrage (6).

9. Collier de serrage selon l'une quelconque des revendications précédentes, **caractérisé en ce que** le boîtier (7) présente un premier dispositif d'encliquetage (19a, 19b, 19c) pour la fixation de la bande de serrage (4).

10. Collier de serrage selon l'une quelconque des revendications précédentes, **caractérisé en ce que** la bande de serrage (4) se compose de métal et est réalisée de sorte qu'une fonction de serrage du collier de serrage (1) soit causée par serrage de la section de serrage (6).

11. Collier de serrage selon l'une quelconque des revendications précédentes, **caractérisé en ce qu'**un support (9) en forme de disque avec un évidement circulaire (18) est disposé latéralement sur le boîtier (7), sachant que le support (9) est réalisé pour le logement du tuyau (2) et/ou du raccord (3).

12. Collier de serrage selon la revendication 11, **caractérisé en ce que** la paroi latérale (15b) tournée vers le support (9) en forme de disque est espacée d'un déport axial (24) du support (9) en forme de disque.

13. Collier de serrage selon l'une quelconque des revendications 11 ou 12, **caractérisé en ce que** le support (9) comporte sur une surface frontale (20) au moins un épaulement (10a, 10b, 11) réalisé pour le support de la section annulaire (5) de la bande de serrage (6).

14. Collier de serrage selon l'une quelconque des revendications 11 à 13, **caractérisé en ce que** le boîtier (7) est réalisé d'un seul tenant en plastique conjointement avec le support (9) en forme de disque.

15. Collier de serrage selon l'une quelconque des revendications 11 à 14, **caractérisé en ce que** le support (9) comporte un second dispositif d'encliquetage (21 a, 21 b, 21 c) réalisé pour la liaison avec le raccord (3).
